# EUROPÄISCHE PATENTSCHRIFT

(11) **EP 3 501 900 B1**
(45) Veröffentlichungstag und Bekanntmachung des Hinweises auf die Patenterteilung: **23.09.2020**
(21) Anmeldenummer: 18203035.3
(22) Anmeldetag: 29.10.2018
(51) Int. Cl.: B60R 5/04

(54) **INNENMODUL FÜR EINEN LADERAUM EINES FAHRZEUGES, LADERAUMVERKLEIDUNG SOWIE HERSTELLVERFAHREN ZUM HERSTELLEN EINES INNENMODULS**
INTERNAL MODULE FOR A CARGO COMPARTMENT OF A VEHICLE, CARGO COMPARTMENT CLADDING AND METHOD FOR PRODUCING AN INTERNAL MODULE
MODULE INTÉRIEUR POUR UN ESPACE DE CHARGEMENT D'UN VÉHICULE, HABILLAGE D'ESPACE DE CHARGEMENT AINSI QUE PROCÉDÉ DE FABRICATION D'UN MODULE INTÉRIEUR

(30) Priorität: 19.12.2017 DE 102017223239
(43) Veröffentlichungstag der Anmeldung: 26.06.2019
(73) Patentinhaber: Volkswagen Aktiengesellschaft, 38440 Wolfsburg (DE)
(72) Erfinder: Gaas, Matthias, 38442 Wolfsburg (DE)

(56) Entgegenhaltungen:
- EP-A1- 1 524 152
- EP-A1- 2 650 175
- DE-A1- 10 242 339
- FR-A1- 2 992 601

## Beschreibung

Die Erfindung betrifft ein Innenmodul für einen Laderaum eines Fahrzeugs gemäß dem Oberbegriff des unabhängigen Anspruchs 1, eine Laderaumverkleidung für einen Laderaum eines Fahrzeuges gemäß dem Oberbegriff des unabhängigen Anspruchs 8 sowie ein Herstellverfahren zum Herstellen eines Innenmoduls.

Aus dem Stand der Technik ist es bekannt, den Laderaum von Fahrzeugen, insbesondere von Kombinationskraftwagen (sogenannten Kombis), derart auszugestalten, dass eine im Laderaum verstaute Fracht zumindest teilweise abgedeckt ist. Eine solche Abdeckung bietet den Vorteil, dass zum einen eine Ladungssicherung während der Fahrt gegeben ist und zum anderen die Ladung nicht ohne weiteres von außerhalb des Fahrzeugs erblickt werden kann. Um jedoch eine größtmögliche Flexibilität zu erhalten, sind Laderaumverkleidungen häufig flexibel feststellbar ausgestaltet, so dass ein Benutzer durch Entfernen oder Reduzieren der Laderaumverkleidung auch größere Gegenstände mit dem Fahrzeug transportieren kann.

Die Verstellung der Laderaumabdeckung ist dabei häufig in der Verkleidung des Laderaums des Fahrzeugs geführt, welche zumindest teilweise aus Kunststoff-Spritzgussteilen besteht. So ist es bisher bekannt, eine Verkleidung des Laderaums als Kunststoff-Spritzgussteil auszugestalten und anschließend eine Führungsschiene auf dem Spritzgussteil zu montieren. Insbesondere aus Kostengründen ist es jedoch wünschenswert, einen möglichst großen Teil der Verkleidung und des Führungsmechanismus einteilig im gleichen Spritzgusswerkzeug herzustellen. Problematisch ist dabei, dass bei mehreren Rastpunkten innerhalb der Führungsschiene eine Entformung des Bauteils für bestimmte Gestaltungsformen unmöglich werden kann, wenn die Führungsschiene und die Innenraumverkleidung vollständig einstückig ausgestaltet werden.

Aus dem Stand der Technik ist beispielsweise eine Laderaumabdeckung aus der EP 1 524 152 A1 bekannt, bei welcher Rastmittel für eine Festlegung von Haltepunkten einer Laderaumabdeckung unterhalb der Führungsschiene montiert werden. Dies erfordert jedoch einen Durchbruch durch einen Teil der Schiene, so dass weitere mechanische Arbeitsvorgänge notwendig sind, wenn die Schiene aus einem Spritzgusswerkzeug entformt wird.

Weiterhin ist ein Montagesystem einer Kraftfahrzeug-Gepäckabdeckung aus der EP 2 650 175 A1 bekannt.

Es ist somit eine Aufgabe der vorliegenden Erfindung, voranstehende aus dem Stand der Technik bekannte Nachteile zumindest teilweise zu beheben. Insbesondere ist es eine Aufgabe der vorliegenden Erfindung, die Herstellung einer Laderaumverkleidung für einen Laderaum eines Fahrzeuges zu verbessern, insbesondere so dass die Gestaltungsfreiheit der Laderaumverkleidung erhöht wird und/oder die Herstellkosten der Laderaumverkleidung gesenkt werden.

Die voranstehende Aufgabe wird gelöst durch ein Innenmodul mit den Merkmalen des Anspruchs 1, eine Laderaumverkleidung mit den Merkmalen des Anspruchs 8 sowie ein Herstellverfahren mit den Merkmalen des Anspruchs 9.

Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Innenmodul beschrieben worden sind, selbstverständlich auch im Zusammenhang mit der erfindungsgemäßen Laderaumverkleidung und/oder dem erfindungsgemäßen Herstellverfahren und jeweils umgekehrt, so dass bezüglich der Offenbarung zu den einzelnen Erfindungsaspekten stets wechselseitig Bezug genommen wird bzw. werden kann.

Erfindungsgemäß weist das Innenmodul für einen Laderaum eines Fahrzeuges eine Führungsschiene auf, in welcher ein Führungskörper einer verstellbaren Laderaumabdeckung zwischen einer ersten und einer zweiten Wandung führbar ist. Dabei ist die erste Wandung zumindest abschnittsweise durch ein Streckenelement ausgebildet. Ferner weist die Führungsschiene zumindest einen ersten Rastabschnitt zum Feststellen des Führungskörpers in einer ersten Rastposition auf. Dabei ist die zweite Wandung zumindest im ersten Rastabschnitt zumindest teilweise durch ein vom Streckenelement separates Einsatzelement gebildet.

Vorzugsweise kann die zweite Wandung zumindest im ersten Rastabschnitt vollständig durch das Einsatzelement gebildet sein. Bei der verstellbaren Laderaumabdeckung kann es sich vorzugsweise um eine automatisch verstellbare Laderaumabdeckung handeln. Dabei umfasst die Laderaumabdeckung vorzugsweise ein Rolloelement, welches mit dem Führungskörper verbunden ist. Insbesondere können zwei Führungskörper vorgesehen sein, wobei jeweils ein Führungskörper auf einer Seite des Laderaums geführt ist. Insbesondere kann das Innenmodul somit vorzugsweise zur einseitigen Montage im Laderaum vorgesehen sein, wobei ein entsprechend spiegelverkehrt ausgebildetes Innenmodul vorzugsweise auf der anderen Seite des Laderaums vorgesehen sein kann. Unter dem Führungskörper kann vorzugsweise eine Rolle oder ein Gleitstein verstanden werden, welche oder welcher eine durch die Führungsschiene vorgegebene Bewegungsrichtung aufweisen kann. Dabei ist die Führungsschiene vorzugsweise zur formschlüssigen Führung des Führungskörpers geeignet, insbesondere wobei die erste und zweite Wandung Begrenzungen der Führungsschiene bilden. Insbesondere können die erste und zweite Wandung auch als erstes und zweites Schienenelement bezeichnet werden. Die erste Wandung ist zumindest abschnittsweise durch ein Streckenelement ausgebildet. Unter einem Streckenelement kann dabei ein Führungsmittel verstanden werden, welches zumindest einen Teil der Führungsstrecke des Führungskörpers vorgibt. Insbesondere kann die Führungsschiene zur horizontalen oder im Wesentlichen horizontalen Führung des Führungskörpers im Fahrzeug ausgebildet sein. Vorzugsweise kann das Streckenelement integral über einen bestimmten Abschnitt oder über die gesamte Führungsschiene ausgeführt sein. Insbesondere um die Laderaumabdeckung bzw. den Führungskörper in einer ersten Rastposition fixieren zu können, ist ferner ein erster Rastabschnitt vorgesehen. Somit kann die erste Rastposition vorgegeben sein, wobei durch die erste Rastposition beispielsweise eine Endposition oder eine Zwischenposition des Führungskörpers der Laderaumabdeckung vorgegeben sein kann. Ferner ist ein Einsatzelement vorgesehen, welches separat vom Streckenelement ausgebildet ist. Dass das Einsatzelement separat vom Streckenelement ausgebildet ist, kann im Rahmen der Erfindung derart verstanden werden, dass das Einsatzelement zumindest separat vom Streckenelement hergestellt ist. Somit kann vorgesehen sein, dass das Streckenelement als einzelnes Bauteil hergestellt wird und das Einsatzelement als weiteres Bauteil, insbesondere in einem weiteren Werkzeug, so dass das Streckenelement und das Einsatzelement erst bei der Montage des Innenmoduls zu einer Baugruppe vereint werden. Insbesondere kann es sich bei dem Einsatzelement ferner um eine vormontierte Baugruppe handeln, welche bei der Montage des Innenmoduls am Streckenelement montiert wird. Vorzugsweise kann es sich bei der verstellbaren Laderaumabdeckung um eine automatisch oder semiautomatisch verstellbare Laderaumabdeckung handeln. Bei derartigen Laderaumabdeckungen kann die erfindungsgemäße Ausgestaltung des Innenmoduls besonders vorteilhaft sein, wenn z.B. spezielle Anforderungen aufgrund des Antriebs der Laderaumabdeckung an den ersten Rastabschnitt gestellt werden.

Dadurch ergibt sich eine hohe Gestaltungsfreiheit der Führungsschiene. So ist es beispielsweise nicht notwendig, dass ein Teil des Rastabschnittes bei einer Entformung des Streckenelementes berücksichtigt wird, wodurch sich insbesondere in Bezug auf die umliegenden Flächen bei der Herstellung eine größere Gestaltungsfreiheit und/oder bessere Entformbarkeit ergibt. Somit kann gleichzeitig die Herstellung der Führungsschiene und somit des Innenmoduls vereinfacht sein, und dadurch können weitere Kosten eingespart werden. Weiterhin kann die Funktion der Führungsschiene verbessert sein, da durch die separate Herstellung des Einsatzelementes beispielsweise komplexere Geometrien, insbesondere des Rastabschnittes, wirtschaftlich herstellbar sein können. So kann dieses z.B. eine vom Streckenelement unterschiedliche Entformungsrichtung aufweisen und/oder separat nachbearbeitbar sein.

Im Rahmen der Erfindung ist ferner denkbar, dass das Einsatzelement an dem Streckenelement form-, stoff- und/oder kraftschlüssig befestigt ist. Somit kann ein Verbindungsbereich vorgesehen sein, an welchem das Einsatzelement direkt an dem Streckenelement befestigt ist. Das Einsatzelement kann beispielsweise mit dem Streckenelement verrastet sein. Dadurch ist eine einfache Möglichkeit gegeben, eine form- und/oder kraftschlüssige Verbindung zwischen dem Einsatzelement und dem Streckenelement zu gewährleisten, welche auch bei der Montage des Einsatzelementes an dem Streckenelement einfach und schnell ausgeführt werden kann. Ferner ist es denkbar, dass das Einsatzelement mit dem Streckenelement verschweißt, insbesondere kunststoff-verschweißt, wird, so dass eine stoffschlüssige Verbindung entsteht. Durch die Verschweißung kann eine besonders sichere Verbindung von Einsatzelement und Streckenelement gewährleistet sein, wobei gleichzeitig auch ein Übergang von Einsatzelement zum Streckenelement im Rahmen der Führungsschiene stufenlos sein kann. Insbesondere kann das Einsatzelement mit dem Streckenelement bündig abschließen. Dadurch können die Laufeigenschaften des Führungskörpers in der Führungsschiene verbessert sein. Bei einer Verschweißung können somit das Streckenelement und das Einsatzelement zu einem als einzelnes Bauteil bzw. als einzelne Baugruppe handhabbaren Teil vereint sein, welches insbesondere jedoch einen Verbindungsbereich aufweist, in welchem z.B. eine Schweißnaht vorgesehen ist.

Es ist ferner denkbar, dass bei einem erfindungsgemäßen Innenmodul der erste Rastabschnitt einen Rastvorsprung aufweist, welcher durch den Führungskörper überwindbar ist, wobei das Einsatzelement einen Niederhalter aufweist, durch welchen der Führungskörper am Rastvorsprung in der ersten Rastposition feststellbar ist. Somit kann insbesondere die Rastfunktion durch das Einsatzelement bereitgestellt werden. Vorzugsweise kann unter der Überwindbarkeit des Rastvorsprungs im Sinne der vorliegenden Erfindung verstanden werden, dass der Führungskörper grundsätzlich, d.h. insbesondere unter bestimmten Bedingungen, den Rastvorsprung passieren kann. Dies kann beispielsweise der Fall sein, wenn der Führungskörper eine bestimmte Kippposition einnimmt oder gegen den Niederhalter mit einer Kraft beaufschlagt wird. Eine Integration des Niederhalters in das Einsatzelement kann ferner montagetechnische Vorteile aufweisen, wenn das Einsatzelement noch vor der Einbausituation bearbeitet werden kann. Auch der Rastvorsprung kann in das Einsatzelement integriert sein. Durch die Rastfunktion mittels Niederhalter und Rastvorsprung kann die Rastfunktion ferner in einfacher Art und Weise realisiert sein. So können der Rastvorsprung und der Niederhalter direkt in die Führungsschiene integriert sein und somit eine zuverlässige Rastwirkung gewährleisten.

Es kann ferner vorgesehen sein, dass bei einem erfindungsgemäßen Innenmodul der Niederhalter als elastisch verformbarer Teil der zweiten Wandung ausgebildet ist, so dass durch den Niederhalter eine Kraft auf den Führungskörper in der ersten Rastposition aufbringbar ist. Dies stellt eine besonders einfache Art und Weise dar, in welcher der Niederhalter konfiguriert sein kann. Vorteilhafterweise kann die zweite Wandung eine Unterbrechung aufweisen, durch welche ein Teil der zweiten Wandung insbesondere durch Biegung bewegbar sein kann. Insbesondere kann der elastisch verformbare Teil der zweiten Wandung zungenartig ausgebildet sein. Vorzugsweise weist das Einsatzelement einen Kunststoff, besonders bevorzugt ein Polypropylen (PP), auf. Dadurch kann die elastische Funktion in zuverlässiger Art und Weise mit einer hohen Lebensdauer bei der elastischen Verformung realisiert werden und gleichzeitig können die Herstellkosten gering gehalten werden. Insbesondere kann somit vorgesehen sein, dass das Führungselement als Gleitstein ausgebildet ist und in der Lage ist, den Rastvorsprung des ersten Rastabschnittes zu überspringen, wobei sich das Führungselement entsprechend in der Führungsschiene orientieren kann. Durch den Niederhalter kann das Führungselement jedoch vorzugsweise gegen die erste Wandung gedrückt werden und ohne Gegenkraft am Rastvorsprung in der ersten Rastposition gehalten werden. Beim Aufbringen einer Gegenkraft kann der Niederhalter elastisch verformt werden und das Führungselement entsprechend den Rastvorsprung überwinden.

Im Rahmen der Erfindung kann ferner vorgesehen sein, dass das Streckenelement einstückig mit einem Verkleidungselement für den Laderaum ausgestaltet ist. Somit kann das Streckenelement und ein Teil der Verkleidung des Laderaums des Fahrzeuges beispielsweise als Kunststoff-Spritzgussteil hergestellt werden. Insbesondere kann unter einstückig im Sinne der vorliegenden Erfindung eine integrale Bauweise, insbesondere durch Kunststoff-Gießen im selben Werkzeug, verstanden werden, wobei Streckenelement und Verkleidungselement vorzugsweise gleichzeitig bzw. im gleichen Werkzeug hergestellt werden können. Dadurch kann die Herstellung des Innenmoduls insgesamt vereinfacht sein. Insbesondere können dabei auch ferner Lager- und Logistikkosten eingespart werden, wenn das Streckenelement und das Verkleidungselement einstückig sind. Durch den Einsatz des Einsatzelementes kann ferner weiterhin eine größtmögliche Gestaltungsfreiheit beibehalten werden, insbesondere da ein kritischer Punkt für die Entformung eines Gussteils auf ein separates Bauteil, d. h. das Einsatzelement, fällt. Ferner kann eine Befestigung des Einsatzelementes am Streckenelement einfacher ausgeführt sein, als eine Befestigung des Streckenelementes am Verkleidungselement.

Bei einem erfindungsgemäßen Innenmodul weist die Führungsschiene einen zweiten und einen dritten Rastabschnitt auf, wobei der erste Rastabschnitt zwischen dem zweiten und dem dritten Rastabschnitt angeordnet ist. Insbesondere handelt es sich somit bei dem ersten Rastabschnitt um den mittleren Rastabschnitt der Führungsschiene. Der zweite und dritte Rastabschnitt können zumindest teilweise einstückig mit dem Streckenelement ausgeführt sein oder weitere Einsatzelemente aufweisen. Insbesondere können ferner der zweite und dritte Rastabschnitt Endpositionen der Laderaumabdeckung darstellen. In diesem Fall können die Endpositionen beispielsweise einfacher ausgeführt sein, als der erste Rastabschnitt, da diese lediglich in eine Richtung ein Verrasten und eine Weiterbewegung des Führungselementes gewährleisten können, während die jeweils andere Richtung durch eine Begrenzung der Führungsschiene blockiert sein kann.

Vorzugsweise kann bei einem erfindungsgemäßen Innenmodul die Führungsschiene ferner eine Laderaumseite, welche zum Laderaum des Fahrzeugs ausrichtbar ist, und eine Karosserieseite, welche zu einer Karosserie des Fahrzeugs ausrichtbar ist, aufweisen, wobei das Einsatzelement von der Karosserieseite montiert ist. So können sich das Streckenelement und das Einsatzelement z.B. im Verbindungsbereich derart überlappen, dass das Einsatzelement gegenüber dem Streckenelement zur Karosserieseite hervorsteht. Dadurch kann in besonders einfacher Art und Weise gewährleistet sein, dass das Einsatzelement zumindest im Bereich der Führung des Führungskörpers bündig mit dem Streckenelement abschließt, so dass ein zuverlässiger Lauf des Führungselementes in der Führungsschiene gewährleistet sein kann. Darüber hinaus kann der Verbindungsbereich somit für den Benutzer unsichtbar oder im Wesentlichen unsichtbar hinter der Front des Verkleidungselementes und/oder des Streckenelementes versteckt werden, so dass der ästhetische Eindruck des Innenmoduls von außen nicht getrübt wird. Im Einbauzustand kann die Karosserieseite vollständig für den Benutzer unsichtbar hinter der Laderaumseite verborgen sein.

Im Rahmen der Erfindung ist ferner denkbar, dass die zweite Wandung zwischen dem zweiten und dritten Rastabschnitt durch das Einsatzelement gebildet ist, und/oder dass das Einsatzelement im ersten Rastabschnitt zumindest einen Teil der ersten und der zweiten Wandung bildet. Somit kann vorgesehen sein, dass die zweite Wandung vollständig oder im Wesentlichen vollständig durch das Einsatzelement ausgebildet wird. Insbesondere kann dadurch ein vollständiger oberer Bereich der Führungsschiene durch das Einsatzelement gebildet sein und auf die erste Wandung bzw. das Streckenelement aufgesetzt werden. Alternativ ist es denkbar, dass das Einsatzelement lediglich einen Teil der Führungsschiene bildet und nur im Bereich des ersten Rastabschnittes vorgesehen ist. Dadurch kann das Einsatzelement klein ausgeführt werden und einfach handhabbar sein.

Gemäß einem weiteren Aspekt der Erfindung ist eine Laderaumverkleidung für einen Laderaum eines Fahrzeuges gemäss Anspruch 8 beansprucht. Die Laderaumverkleidung weist eine verstellbare Laderaumabdeckung auf und zumindest ein erfindungsgemäßes Innenmodul mit einer Führungsschiene, in welcher ein Führungskörper der Laderaumabdeckung zwischen einer ersten und einer zweiten Wandung geführt ist. Dabei ist die erste Wandung zumindest abschnittsweise durch ein Streckenelement ausgebildet, wobei die Führungsschiene zumindest einen ersten Rastabschnitt zum Feststellen des Führungskörpers in einer ersten Rastposition aufweist. Die zweite Wandung ist dabei zumindest im ersten Rastabschnitt zumindest teilweise durch ein von dem Streckenelement separates Einsatzelement gebildet. Die verstellbare Laderaumabdeckung kann vorzugsweise selbstständig oder automatisch verstellbar sein. Insbesondere kann die Laderaumverkleidung dazu ein Antriebselement aufweisen, wobei es sich bei dem Antriebselement vorzugsweise um einen Elektromotor oder eine Feder handeln kann. Insbesondere kann die Laderaumabdeckung horizontal oder im Wesentlichen horizontal im Fahrzeug führbar sein. Somit kann sich die Führungsschiene im Montagezustand vorzugsweise horizontal oder im Wesentlichen horizontal im Fahrzeug erstrecken.

Somit bringt eine erfindungsgemäße Laderaumverkleidung die gleichen Vorteile mit sich, wie sie ausführlich bereits mit Bezug auf ein erfindungsgemäßes Innenmodul beschrieben worden sind. Insbesondere ist es dabei denkbar, dass die Laderaumverkleidung ein zweites Innenmodul aufweist, welches spiegelbildlich zum ersten Innenmodul ausgebildet ist, so dass die Laderaumabdeckung an zwei Seiten führbar ist.

Gemäß einem weiteren Aspekt der Erfindung ist ein Herstellverfahren zum Herstellen eines Innenmoduls gemäss Anspruch 9 beansprucht. Das Herstellverfahren umfasst die folgenden Schritte:
- Gießen, insbesondere Kunststoff-Spritzgießen, eines Streckenelementes einer ersten Wandung einer Führungsschiene, in welcher ein Führungskörper zwischen der ersten Wandung und einer zweiten Wandung führbar ist,
- Fertigen eines Einsatzelementes, durch welches die zweite Wandung zumindest in einem ersten Rastabschnitt zum Feststellen des Führungskörpers in einer ersten Rastposition der Führungsschiene zumindest teilweise bildbar ist,
- Montieren des Einsatzelementes mit dem Streckenelement.

Das Montieren des Einsatzelementes mit dem Streckenelement kann vorzugsweise ein Befestigen des Einsatzelementes am Streckenelement umfassen. Insbesondere kann das Einsatzelement dabei mit dem Streckenelement verrastet oder verschweißt, insbesondere kunststoff-verschweißt, werden. Dabei sind jedoch noch weitere Befestigungsarten, wie z. B. Verschrauben oder dgl., denkbar. Bei dem Gießen des Streckenelementes kann es sich vorzugsweise um ein Kunststoff-Spritzgießen handeln. Insbesondere kann dabei gleichzeitig ein Gießen eines Verkleidungselementes für den Laderaum des Fahrzeuges erfolgen, wobei das Streckenelement und das Verkleidungselement insbesondere einstückig gegossen werden können. Das Fertigen des Einsatzelementes kann vorzugsweise ebenfalls durch einen Kunststoff-Spritzguss erfolgen und/oder eine mechanische Bearbeitung umfassen. Beispielsweise kann das Einsatzelement ein Frästeil sein. Vorzugsweise kann das Einsatzelement zunächst spritzgegossen werden und anschließend mechanisch nachbearbeitet werden. Dabei kann auch eine Montage eines Niederhalters an der zweiten Wandung erfolgen.

Durch ein erfindungsgemäßes Herstellverfahren können insbesondere Kosten eingespart werden, und gleichzeitig kann eine hohe Gestaltungsfreiheit der einzelnen Bauteile und Flächen der Bauteile erhalten bleiben. Durch das Fertigen des Einsatzelementes separat vom Guss des Streckenelementes kann es beispielsweise nicht notwendig sein, das Einsatzelement bei der Entformung des Streckenelementes zu berücksichtigen. Somit bringt ein erfindungsgemäßes Herstellverfahren die gleichen Vorteile mit sich, wie sie bereits ausführlich mit Bezug auf eine erfindungsgemäße Laderaumverkleidung und/oder ein erfindungsgemäßes Innenmodul beschrieben worden sind. Insbesondere kann das dadurch hergestellte Innenmodul für den Einsatz bei einer erfindungsgemäßen Laderaumverkleidung geeignet sein.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder den Zeichnungen hervorgehenden Merkmale und/oder Vorteile, einschließlich konstruktiver Einzelheiten, räumlicher Anordnungen und Verfahrensschritte, können sowohl für sich als auch in den verschiedensten Kombinationen erfindungswesentlich sein. Dabei ist zu beachten, dass die Figuren nur beschreibenden Charakter haben und nicht dazu gedacht sind, die Erfindung in irgendeiner Form einzuschränken. Es zeigen:
- Fig. 1: ein erfindungsgemäßes Innenmodul in schematischer Perspektivansicht in einem ersten Ausführungsbeispiel,
- Fig. 2a bis 2d: Schnittdarstellungen einer Führungsschiene des Innenmoduls des ersten Ausführungsbeispiels in schematischen Ansichten,
- Fig. 3: eine Rückansicht des erfindungsgemäßen Innenmoduls des ersten Ausführungsbeispiels in schematischer Perspektivansicht,
- Fig. 4: eine Schnittansicht einer Führungsschiene eines erfindungsgemäßen Innenmoduls in schematischer Ansicht in einem weiteren Ausführungsbeispiel,
- Fig. 5: ein Fahrzeug mit einer erfindungsgemäßen Laderaumverkleidung in einem weiteren Ausführungsbeispiel,
- Fig. 6: ein erfindungsgemäßes Herstellverfahren zum Herstellen eines Innenmoduls in einem weiteren Ausführungsbeispiel.

In den nachfolgenden Figuren werden für die gleichen technischen Merkmale auch von unterschiedlichen Ausführungsbeispielen die identischen Bezugszeichen verwendet.

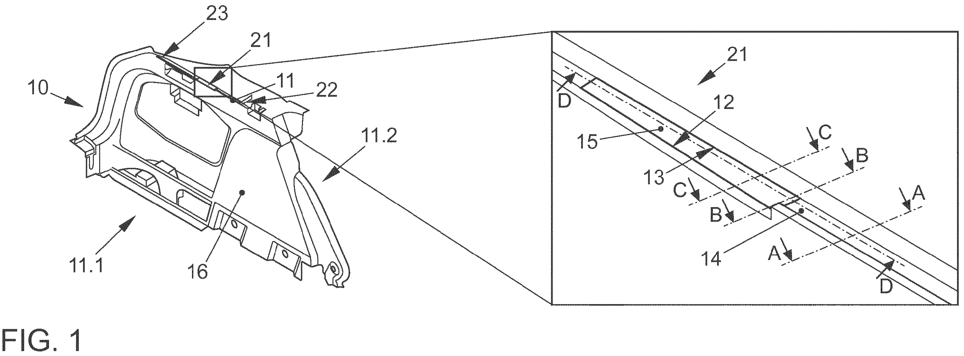

Fig. 1 zeigt ein erfindungsgemäßes Innenmodul 10 in einem ersten Ausführungsbeispiel in schematischer Perspektivansicht mit einer Detailansicht. Das Innenmodul 10 ist dabei zum Einsatz in einem Laderaum 2 eines Fahrzeuges 1 geeignet und weist eine Führungsschiene 11 auf, in welcher ein Führungskörper 4 einer verstellbaren Laderaumabdeckung 3 führbar ist. Die Führungsschiene 11 ist einstückig mit einem Verkleidungselement 16 einer Laderaumverkleidung 6 ausgeführt. In der in Fig. 1 dargestellten Perspektivansicht ist das Innenmodul 10 ferner von einer Laderaumseite 11.1 gezeigt, welche zum Laderaum 2 des Fahrzeugs 1 ausrichtbar ist. Die Führungsschiene 11 weist drei Rastabschnitte 21, 22, 23 auf, wobei ein erster Rastabschnitt 21 zwischen einem zweiten Rastabschnitt 22 und einem dritten Rastabschnitt 23 angeordnet ist. Der zweite und der dritte Rastabschnitt 22, 23 bilden dabei jeweils Endpositionen für die Laderaumabdeckung 3 bzw. den Führungskörper 4 der verstellbaren Laderaumabdeckung 3. Der erste Rastabschnitt 21 ist ferner zum Feststellen des Führungskörpers 4 in einer ersten Rastposition 24 geeignet, wobei die erste Rastposition 24 in Bezug auf die Laderaumabdeckung 3 auch als mittlere Rastposition bezeichnet werden kann. Gemäß der Detailansicht des ersten Rastabschnittes 21 ist vorgesehen, dass die Führungsschiene 11 eine erste Wandung 12 und eine zweite Wandung 13 aufweist, zwischen denen der Führungskörper 4 führbar ist. Die erste Wandung 12 ist zumindest abschnittsweise durch ein Streckenelement 14 ausgebildet und die zweite Wandung 13 ist zumindest im ersten Rastabschnitt 21 durch ein vom Streckenelement 14 separates Einsatzelement 15 gebildet. Um die Rastfunktion im ersten Rastabschnitt 21 der Führungsschiene 11 zur Verfügung zu stellen, ist somit das Einsatzelement 15 fertigungstechnisch zumindest teilweise vom Streckenelement 14 entkoppelt, so dass bei der Ausgestaltung der Entformung bzw. der Entformungsflächen der erste Rastabschnitt 21 nicht oder nur teilweise berücksichtigt werden muss.

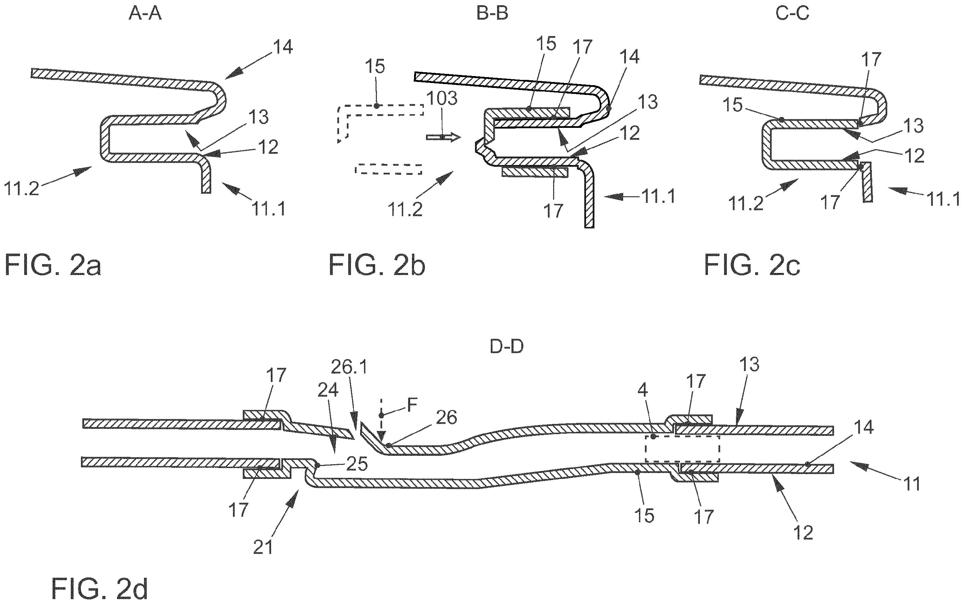

Die Fig. 2a bis 2d zeigen ferner Schnittdarstellungen in schematischer Ansicht, wobei sich die Schnitte jeweils auf die Detaildarstellung der Fig. 1 beziehen. So zeigt Fig. 2a einen Schnitt A-A gemäß dem Ausführungsbeispiel der Fig. 1, wobei in diesem Bereich der Führungsschiene 11 die erste Wandung 12 und die zweite Wandung 13 einstückig ausgeführt sind und somit gemeinsam das Streckenelement 14 in diesem Abschnitt bilden. Fig. 2b zeigt ferner eine weitere Schnittansicht gemäß Schnitt B-B der Fig. 1, wobei in diesem Abschnitt das Streckenelement 14 noch die erste und zweite Wandung 12, 13 bildet, insbesondere wobei die Wandungen 12, 13 jedoch einen Verbindungsbereich 17 zum Einsatzelement 15 aufweisen. Ferner ist in gestrichelter Darstellung eine mögliche Montage 103 des Einsatzelementes 15 von einer Karosserieseite 11.2 des Innenmoduls 10 gezeigt. Fig. 2c zeigt ferner einen Schnitt C-C der Fig. 1, wobei die erste und zweite Wandung 12, 13 in diesem Abschnitt vollständig durch das Einsatzelement 15 gebildet werden. Fig. 2d zeigt ferner einen Schnitt D-D der Fig. 1 in schematischer Darstellung, wobei entsprechend deutlich wird, dass im ersten Rastabschnitt 21 die erste und zweite Wandung 12, 13 durch das Einsatzelement 15 gebildet werden, während die erste und zweite Wandung 12, 13 im weiteren Verlauf der Führungsschiene 11, durch das Streckenelement 14 gebildet werden. Der erste Rastabschnitt 21 weist ferner eine erste Rastposition 24 auf, in welcher der Führungskörper 4 der Laderaumabdeckung 3 feststellbar ist. Dazu weist das Einsatzelement 15 einen Rastvorsprung 25 auf, welcher grundsätzlich durch den Führungskörper 4 überwindbar ist, wenn der Führungskörper 4 sich in der Führungsschiene 11 bewegt. Um den Führungskörper 4 in der ersten Rastposition 24 festzustellen, weist das Einsatzelement 15 ferner einen Niederhalter 26 auf, durch welchen eine Kraft F auf den Führungskörper 4 ausübbar ist, so dass der Führungskörper 4 am Rastvorsprung 25 fixiert ist. Um den Führungskörper 4 aus der ersten Rastposition 24 zu lösen, kann somit eine Gegenkraft gegen die Kraft F erforderlich sein. Insbesondere ist der Niederhalter 26 als elastischer Teil der zweiten Wandung 13 ausgeführt, wobei eine Aussparung 26.1 die zumindest teilweise Beweglichkeit des Niederhalters 26 bewirkt. Dazu kann das Einsatzelement 15 vorzugsweise aus einem elastischen Material, bevorzugt aus einem Kunststoff, besonders bevorzugt aus einem Polypropylen (PP), hergestellt sein.

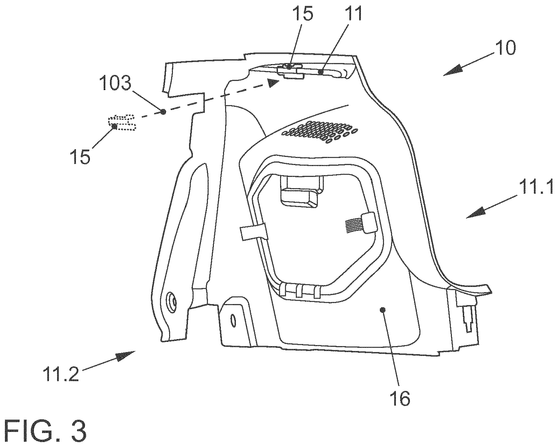

Fig. 3 zeigt ferner eine Ansicht des Innenmoduls 10 von einer Karosserieseite 11.2, welche zu einer Karosserie 5 des Fahrzeugs 1 ausrichtbar ist. Dabei ist die Montage 103 des Einsatzelements 15 gezeigt, welches einen Teil der Führungsschiene 11 im Montagezustand bildet. Ferner wird deutlich, dass das Verkleidungselement 16 zur Bereitstellung unterschiedlichster Funktionen und Designaspekte einen hohen konstruktiven Freiheitsgrad benötigt, welcher durch die fertigungstechnische Entkopplung des Einsatzelementes 15 erhöht ist.

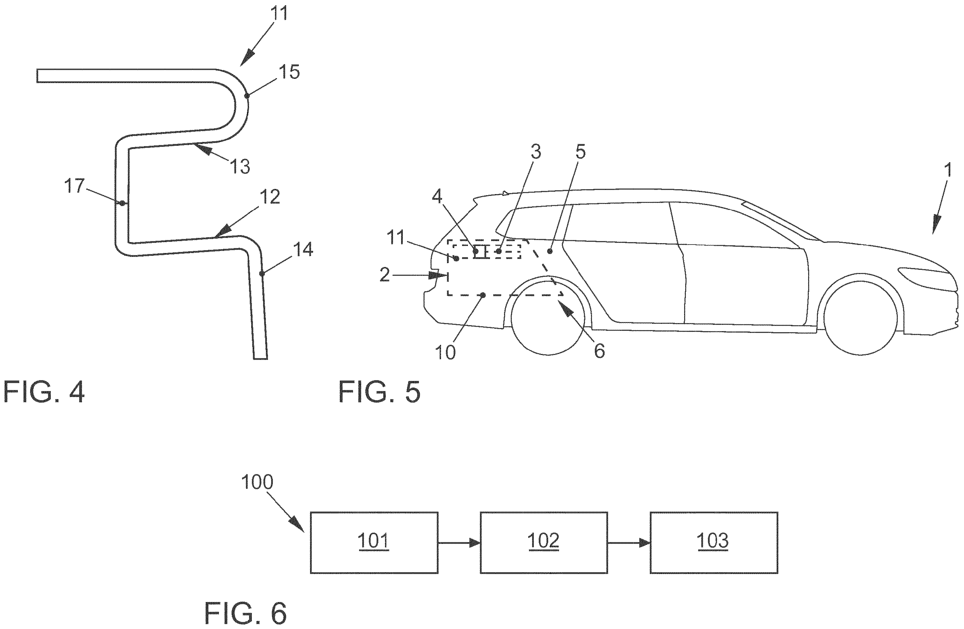

Fig. 4 zeigt eine Führungsschiene 11 eines erfindungsgemäßen Innenmoduls 10 in schematischer Schnittansicht in einem weiteren Ausführungsbeispiel. Dabei weist die Führungsschiene 11 eine erste Wandung 12 und eine zweite Wandung 13 auf, wobei zwischen der ersten und zweiten Wandung 12, 13 ein Verbindungsbereich 17 vorgesehen ist, durch welchen ein Streckenelement 14, welches die erste Wandung 12 der Führungsschiene 11 bildet, und ein Einsatzelement 15, welches die zweite Wandung 13 der Führungsschiene 11 bildet, verbunden sind. Somit kann beispielsweise die zweite Wandung 13 vollständig oder im Wesentlichen vollständig durch das Einsatzelement 15 gebildet sein. Auch durch eine derartige Ausführung können das Streckenelement 14 und das Einsatzelement 15 fertigungstechnisch entkoppelt sein und somit bei der Gestaltung des Streckenelementes 14 die Gestaltung der Entformungsrichtung vereinfacht sein, wenn dieses beispielsweise als Gussteil ausgeführt wird. Insbesondere kann dabei die zweite Wandung 13 einen Niederhalter 26 aufweisen, durch welchen eine erste Rastposition 24 eines ersten Rastabschnittes 21 der Führungsschiene 11 definierbar ist.

Fig. 5 zeigt ferner ein Fahrzeug 1 mit einem Laderaum 2, wobei der Laderaum 2 des Fahrzeugs 1 eine Laderaumverkleidung 6 aufweist. Die Laderaumverkleidung 6 ist im Laderaum 2 an einer Karosserie 5 des Fahrzeugs 1 befestigt und weist eine verstellbare Laderaumabdeckung 3 auf, durch welche der Laderaum 2 zumindest teilweise verschließbar ist. Somit können im Laderaum 2 gelagerte Gegenstände nach außen nicht sichtbar sein und/oder bei einer Fahrt des Fahrzeugs 1 gesichert sein. Zur Lagerung der Laderaumabdeckung 3 weist die Laderaumabdeckung 3 ferner einen Führungskörper 4 auf, der in einer Führungsschiene 11 eines erfindungsgemäßen Innenmoduls 10 gelagert ist. Vorzugsweise weist die Laderaumabdeckung 3 zwei Führungskörper 4 auf, welche insbesondere symmetrisch an den Seiten des Laderaums 2 gelagert sind. Dazu können zwei erfindungsgemäße Innenmodule 10 in spiegelverkehrter Ausführung für die Seiten der Laderaumverkleidung 6 vorgesehen sein. Insbesondere kann das Innenmodul 10 oder können die Innenmodule 10 gemäß einem der vorhergehenden Ausführungsbeispiele ausgebildet sein.

Fig. 6 zeigt ferner ein Herstellverfahren 100 zum Herstellen eines Innenmoduls 10, insbesondere eines Innenmoduls gemäß einem der vorhergehenden Ausführungsbeispiele. Dabei ist vorgesehen, dass ein Gießen 101 eines Streckenelementes 14 einer ersten Wandung 12 einer Führungsschiene 11 erfolgt, wobei die Führungsschiene 11 dazu vorgesehen ist, einen Führungskörper 4 zwischen der ersten Wandung 12 und einer zweiten Wandung 13 zu führen. Das Gießen 101 kann vorzugsweise als Kunststoffspritzguss ausgeführt werden und gleichzeitig bzw. im gleichen Werkzeug mit dem Gießen eines Verkleidungselementes 16 einer Laderaumverkleidung 6 erfolgen. Ferner ist ein Fertigen 102 eines Einsatzelementes 15 vorgesehen, welches zumindest in einem ersten Rastabschnitt 21 die zweite Wandung 13 zum Feststellen des Führungskörpers 4 in einer ersten Rastposition 24 der Führungsschiene 11 bilden kann. Das Fertigen 102 kann dabei einen Kunststoffspritzguss und/oder eine mechanische Bearbeitung umfassen. Nach dem Gießen 101 und Fertigen 102 ist ferner ein Montieren 103 des Einsatzelementes 15 mit dem Streckenelement 14 vorgesehen. Dabei kann das Montieren 103 ein Befestigen des Einsatzelementes 15 an dem Streckenelement 14 umfassen, wobei das Befestigen vorzugsweise stoffschlüssig, kraftschlüssig und/oder formschlüssig erfolgen kann. Somit kann in einfacher Art und Weise ein Innenmodul hergestellt werden, welches eine hohe Gestaltungsfreiheit insbesondere für ein angegossenes Verkleidungselement 16 für einen Laderaum 2 eines Fahrzeuges 1 ermöglicht.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Fahrzeug
- 2: Laderaum
- 3: Laderaumabdeckung
- 4: Führungskörper
- 5: Karosserie
- 6: Laderaumverkleidung

- 10: Innenmodul
- 11: Führungsschiene
- 11.1: Laderaumseite
- 11.2: Karosserieseite
- 12: erste Wandung
- 13: zweite Wandung
- 14: Streckenelement
- 15: Einsatzelement
- 16: Verkleidungselement
- 17: Verbindungsbereich

- 21: erster Rastabschnitt
- 22: zweiter Rastabschnitt
- 23: dritter Rastabschnitt
- 24: erste Rastposition
- 25: Rastvorsprung
- 26: Niederhalter

- 100: Herstellverfahren
- 101: Gießen
- 102: Fertigen
- 103: Montieren

- F: Kraft

## Patentansprüche

1. Innenmodul (10) für einen Laderaum (2) eines Fahrzeuges (1), aufweisend eine Führungsschiene (11), in welcher ein Führungskörper (4) einer verstellbaren Laderaumabdeckung (3) zwischen einer ersten und einer zweiten Wandung (12, 13) der Führungsschiene (11) führbar ist, wobei die erste Wandung (12) zumindest abschnittsweise durch ein Streckenelement (14) ausgebildet ist,
wobei die Führungsschiene (11) zumindest einen ersten Rastabschnitt (21) zum Feststellen des Führungskörpers (4) in einer ersten Rastposition (24) aufweist, **dadurch gekennzeichnet,**
**dass** die zweite Wandung (13) zumindest im ersten Rastabschnitt (21) zumindest teilweise durch ein von dem Streckenelement (14) separates Einsatzelement (15) gebildet ist, wobei die Führungsschiene (11) einen zweiten und einen dritten Rastabschnitt (22, 23) aufweist, wobei der erste Rastabschnitt (21) zwischen dem zweiten und dem dritten Rastabschnitt (22, 23) angeordnet ist.

2. Innenmodul (10) nach dem vorhergehenden Anspruch,
**dadurch gekennzeichnet,**
**dass** das Einsatzelement (15) an dem Streckenelement (14) form-, stoff- und/oder kraftschlüssig befestigt ist.

3. Innenmodul (10) nach einem der vorhergehenden Ansprüche,
**dadurch gekennzeichnet,**
**dass** der erste Rastabschnitt (21) einen Rastvorsprung (25) aufweist, welcher durch den Führungskörper (4) überwindbar ist, wobei das Einsatzelement (15) einen Niederhalter (26) aufweist, durch welchen der Führungskörper (4) am Rastvorsprung (25) in der ersten Rastposition (24) feststellbar ist.

4. Innenmodul (10) nach Anspruch 3,
**dadurch gekennzeichnet,**
**dass** der Niederhalter (26) als elastisch verformbarer Teil der zweiten Wandung (13) ausgebildet ist, so dass durch den Niederhalter (26) eine Kraft (F) auf den Führungskörper (4) in der ersten Rastposition (24) aufbringbar ist.

5. Innenmodul (10) nach einem der vorhergehenden Ansprüche,
**dadurch gekennzeichnet,**
**dass** das Streckenelement (14) einstückig mit einem Verkleidungselement (16) für den Laderaum (2) ausgestaltet ist.

6. Innenmodul (10) nach einem der vorhergehenden Ansprüche,
**dadurch gekennzeichnet,**
**dass** die Führungsschiene (11) eine Laderaumseite (11.1), welche zum Laderaum (2) des Fahrzeugs (1) ausrichtbar ist, und eine Karosserieseite (11.2), welche zu einer Karosserie (5) des Fahrzeugs (1) ausrichtbar ist, aufweist, wobei das Einsatzelement (15) von der Karosserieseite (11.2) montiert ist.

7. Innenmodul (10) nach einem der vorhergehenden Ansprüche,
**dadurch gekennzeichnet,**
**dass** die zweite Wandung (13) zwischen dem zweiten und dritten Rastabschnitt (22, 23) durch das Einsatzelement (15) gebildet ist und/oder dass das Einsatzelement (15) im ersten Rastabschnittes (21) zumindest einen Teil der ersten und der zweiten Wandung (12, 13) bildet.

8. Laderaumverkleidung (6) für einen Laderaum (2) eines Fahrzeuges (1), aufweisend eine verstellbare Laderaumabdeckung (3), und
zumindest ein Innenmodul (10) nach einem der vorhergehenden Ansprüche mit einer Führungsschiene (11), in welcher ein Führungskörper (4) der Laderaumabdeckung (3) zwischen einer ersten und einer zweiten Wandung (12, 13) geführt ist, wobei die erste Wandung (12) zumindest abschnittsweise durch ein Streckenelement (14) ausgebildet ist,
wobei die Führungsschiene (11) zumindest einen ersten Rastabschnitt (21) zum Feststellen des Führungskörpers (4) in einer ersten Rastposition (24) aufweist, **dadurch gekennzeichnet,**
**dass** die zweite Wandung (13) zumindest im ersten Rastabschnitt (21) zumindest teilweise durch ein von dem Streckenelement (14) separates Einsatzelement (15) gebildet ist.

9. Herstellverfahren (100) zum Herstellen eines Innenmoduls (10) nach einem der Ansprüche 1 bis 7 umfassend die folgenden Schritte:
- Gießen (101) eines Streckenelementes (14) einer ersten Wandung (12) einer Führungsschiene (11), in welcher ein Führungskörper (4) zwischen der ersten Wandung (12) und einer zweiten Wandung (13) führbar ist,
- Fertigen (102) eines Einsatzelementes (15), durch welches die zweite Wandung (13) zumindest in einem ersten Rastabschnitt (21) zum Feststellen des Führungskörpers (4) in einer ersten Rastposition (24) der Führungsschiene (11) zumindest teilweise bildbar ist,
- Montieren (103) des Einsatzelementes (15) mit dem Streckenelement (14).

## Claims

1. Internal module (10) for a cargo space (2) of a vehicle (1), having a guide rail (11) in which a guide member (4) of an adjustable cargo space cover (3) is guidable between a first wall (12) and a second wall (13) of the guide rail (11), wherein the first wall (12) at least in portions is configured by a track element (14), wherein the guide rail (11) has at least one first latching portion (21) for securing the guide member (4) in a first latching position (24),
**characterized in that**
the second wall (13), at least in the first latching portion (21), is at least partially formed by an insert element (15) that is separate from the track element (14), wherein the guide rail (11) has a second latching portion (22) and a third latching portion (23), wherein the first latching portion (21) is disposed between the second latching portion (22) and the third latching portion (23).

2. Internal module (10) according to the preceding claim,
**characterized in that**
the insert element (15) is fastened to the track element (14) in a form-fitting, materially integral and/or force-fitting manner.

3. Internal module (10) according to one of the preceding claims,
**characterized in that**
the first latching portion (21) has a latching protrusion (25) which is able to be overcome by the guide member (4), wherein the insert element (15) has a downholder (26) by way of which the guide member (4) in the first latching position (24) is securable on the latching protrusion (25).

4. Internal module (10) according to Claim 3,
**characterized in that**
the downholder (26) is configured as an elastically deformable part of the second wall (13) such that a force (F) on account of the downholder (26) is able to be applied to the guide member (4) in the first latching position (24).

5. Internal module (10) according to one of the preceding claims,
**characterized in that**
the track element (14) is designed so as to be integral to a cladding element (16) for the cargo space (2).

6. Internal module (10) according to one of the preceding claims,
**characterized in that**
the guide rail (11) has a cargo space side (11.1) which is able to be aligned toward the cargo space (2) of the vehicle (1), and a body side (11.2) which is able to be aligned toward a body (5) of the vehicle (1), wherein the insert element (15) is assembled from the body side (11.2).

7. Internal module (10) according to one of the preceding claims,
**characterized in that**
the second wall (13) between the second latching portion (22) and the third latching portion (23) is formed by the insert element (15), and/or **in that** the insert element (15) in the first latching portion (21) forms at least part of the first wall (12) and the second wall (13).

8. Cargo space cladding (6) for a cargo space (2) of a vehicle (1), having an adjustable cargo space cover (3) and at least one internal module (10) according to one of the preceding claims, having a guide rail (11) in which a guide member (4) of the cargo space cover (3) is guided between a first wall (12) and a second wall (13),wherein the first wall (12) at least in portions is configured by a track element (14),
wherein the guide rail (11) has at least one first latching portion (21) for securing the guide member (4) in a first latching position (24),
**characterized in that**
the second wall (13), at least in the first latching portion (21), is at least partially formed by an insert element (15) that is separate from the track element (14).

9. Production method (100) for producing an internal module (10) according to one of Claims 1 to 7, comprising the following method steps:
- casting (101) a track element (14) of a first wall (12) of a guide rail (11) in which a guide member (4) is able to be guided between the first wall (12) and a second wall (13);
- manufacturing (102) an insert element (15) by way of which the second wall (13), at least in a first latching portion (21) for securing the guide member (4) in a first latching position (24) of the guide rail (11), is able to be at least partially formed;
- assembling (103) the insert element (15) with the track element (14).

## Revendications

1. Module intérieur (10) destiné à un espace de chargement (2) d'un véhicule (1), ledit module comportant
un rail de guidage (11) dans lequel un corps de guidage (4) d'un moyen de recouvrement d'espace de chargement réglable (3) peut être guidé entre une première et une deuxième paroi (12, 13) du rail de guidage (11), la première paroi (12) étant formée au moins par portions par un élément de voie (14),
le rail de guidage (11) comportant au moins une première portion d'encliquetage (21) destinée à fixer le corps de guidage (4) dans une première position d'encliquetage (24),
**caractérisé en ce que**
la deuxième paroi (13) est formée au moins dans la première portion d'encliquetage (21) au moins partiellement par un élément d'insertion (15) séparé de l'élément de voie (14), le rail de guidage (11) comportant une deuxième et une troisième portion d'encliquetage (22, 23), la première portion d'encliquetage (21) étant disposée entre la deuxième et la troisième portion d'encliquetage (22, 23).

2. Module intérieur (10) selon la revendication précédente,
**caractérisé en ce que**
l'élément d'insertion (15) est fixé à l'élément de voie (14) par une liaison par complémentarité de formes, une liaison de matière et/ou une liaison en force.

3. Module intérieur (10) selon l'une des revendications précédentes,
**caractérisé en ce que**
la première portion d'encliquetage (21) comporte une saillie d'encliquetage (25) qui peut être surmontée par le corps de guidage (4), l'élément d'insertion (15) comportant un dispositif de retenue (26) permettant de fixer le corps de guidage (4) à la saillie d'encliquetage (25) dans la première position d'encliquetage (24).

4. Module intérieur (10) selon la revendication 3,
**caractérisé en ce que**
le dispositif de retenue (26) est conçu comme une partie élastiquement déformable de la deuxième paroi (13) de sorte qu'une force (F) puisse être appliquée sur le corps de guidage (4) dans la première position d'encliquetage (24) par le dispositif de retenue (26).

5. Module intérieur (10) selon l'une des revendications précédentes,
**caractérisé en ce que**
l'élément de voie (14) est conçu d'une seule pièce avec un élément d'habillage (16) destiné à l'espace de chargement (2).

6. Module intérieur (10) selon l'une des revendications précédentes,
**caractérisé en ce que**
le rail de guidage (11) comporte un côté espace de chargement (11.1), qui peut être orienté vers l'espace de chargement (2) du véhicule (1), et un côté carrosserie (11.2) qui peut être orienté vers une carrosserie (5) du véhicule (1), l'élément d'insertion (15) étant monté depuis le côté carrosserie (11.2).

7. Module intérieur (10) selon l'une des revendications précédentes,
**caractérisé en ce que**
la deuxième paroi (13) située entre la deuxième et la troisième portion d'encliquetage (22, 23) est formée par l'élément d'insertion (15) et/ou l'élément d'insertion (15) situé dans la première portion d'encliquetage (21) forme au moins une partie de la première et de la deuxième paroi (12, 13).

8. Habillage d'espace de chargement (6) destiné à un espace de chargement (2) d'un véhicule (1), ledit habillage comportant un moyen de recouvrement d'espace de chargement réglable (3), et au moins un module intérieur (10) selon l'une des revendications précédentes comprenant un rail de guidage (11) dans lequel un corps de guidage (4) du moyen de recouvrement d'espace de chargement (3) est guidé entre une première et une deuxième paroi (12, 13), la première paroi (12) étant formée au moins par portions par un élément de voie (14),
le rail de guidage (11) comportant au moins une première portion d'encliquetage (21) destinée à fixer le corps de guidage (4) dans une première position d'encliquetage (24),
**caractérisé en ce que**
la deuxième paroi (13) est formée au moins dans la première portion d'encliquetage (21) au moins partiellement par un élément d'insertion (15) séparé de l'élément de voie (14).

9. Procédé de fabrication (100) destiné à la fabrication d'un module intérieur (10) selon l'une des revendications 1 à 7, ledit procédé comprenant les étapes suivantes :
- couler (101) un élément de voie (14) d'une première paroi (12) d'un rail de guidage (11) dans lequel un corps de guidage (4) peut être guidé entre la première paroi (12) et une deuxième paroi (13),
- fabriquer (102) un élément d'insertion (15) permettant de former au moins partiellement la deuxième paroi (13) au moins dans une première portion d'encliquetage (21) pour fixer le corps de guidage (4) dans une première position d'encliquetage (24) du rail de guidage (11),
- monter (103) l'élément d'insertion (15) avec l'élément de voie (14).
